# EUROPÄISCHE PATENTANMELDUNG

(11) **EP 0 856 242 A1**
(43) Veröffentlichungstag der Anmeldung: **05.08.1998**
(21) Anmeldenummer: 97890214.6
(22) Anmeldetag: 31.10.1997
(51) Int. Cl.: A01B 29/04

(54) **Ackerwalze**

(30) Priorität: 11.11.1996 AT 1974/96
(71) Anmelder: Thomas Hatzenbichler und Sohn, 9433 St. Andrä i.Lav. (AT)
(72) Erfinder: Hatzenbichler, Thomas, jun., 9433 St. Andrä i.Lav. (AT)
(74) Vertreter: Beer, Manfred, Dipl.-Ing.

(57) **Zusammenfassung**

Eine Ackerwalze (1) ist aus mehreren Ringsegmenten (5) zusammengesetzt. Jedes Ringsegment (5) besteht aus einer Formrohrnabe (8) und einem Flacheisenring (6), der mit der Nabe (8) über mehrere Speichen verbunden ist. Der Ring (6) ist abwechselnd nach der einen und nach der anderen Seite geknickt, wobei die Knicklinien die Achse (10) des Ringsegmentes (5) schneiden und mit dieser einen Winkel (a) ungleich 90° einschließen. Dadurch wird im obersten Bodenbereich (I) eine Mischstruktur aus Grob- und Feinerdeteilen erhalten, in einen mittleren Bodenbereich (II) eine Krümelstruktur erzielt, und in einem unteren Bodenbereich (III) eine Rückverfestigung des Bodens bewirkt.

## Beschreibung

Die Erfindung betrifft eine Ackerwalze zur Krümelung und Rückverfestigung des Ackerbodens, wobei auf einer Welle mehrere Ringsegmente angeordnet sind, die in einer Radialebene liegende Ringe aufweisen, die über Speichen mit den Naben der Ringsegmente verbunden sind, die entweder alleine oder als Frontwalze und/oder Nachlaufwalze in Verbindung mit einer Bestellkombination im Ackerbau zur Bodenkrümelung und -rückverfestigung eingesetzt werden kann.

Problematisch bei den bekannten Ackergeräten, die zur Bodenkrümelung eingesetzt werden, ist es, daß sie nicht nur kompliziert aufgebaut sind, sondern auch die ihnen zugeordnete Aufgabe nur teilweise erfüllen, insbesondere da sie nach der Krümelung Erdaufwürfe bewirken.

Aus der FR 2 547 696 A1 ist eine gattungsgemäße Ackerwalze bekannt. Bei dieser Ackerwalze sind die Ringe selbst flach und eben ausgeführt. An den Ringen sind Plättchen befestigt, die in Achsrichtung zu beiden Seiten des Ringes mit gleicher Länge abstehen und in Umfangsrichtung in unterschiedliche Richtungen weisen. Durch diese Ackerwalze wird vornehmlich ein oberflächliches Verdichten des Bodens nach Art einer Walze erreicht.

Gleiches gilt im wesentlichen für die in der DE 44 06 802 A1, FR 2 672 463 A1 und FR 2 547 696 A1 beschriebenen Ackerwalzen, die seitlich, d.h. in Achsrichtung von ebenen und flachen Ringen abstehende Zapfen oder Vorsprünge aufweisen.

Der Erfindung liegt die Aufgabe zugrunde, eine Ackerwalze anzugeben, mit der eine zufriedenstellende Krümelung der Erde ohne weiteres erreicht werden kann.

Erfindungsgemäß wird diese Aufgabe mit einer Ackerwalze gelöst, die sich dadurch auszeichnet, daß die Ringe Bereiche aufweisen, die zur Radialebene und zur Umfangsrichtung abwechselnd in entgegengesetzte Richtungen schräggestellt sind.

Die erfindungsgemäße Ackerwalze zeichnet sich durch einen einfachen Aufbau aus und kann auf einfache Weise aus Flacheisen und Formrohren hergestellt werden. Für die Herstellung sind bloß einfache Biege- oder Abkantvorgänge und Schweißarbeiten erforderlich. Die erfindungsgemäße Formgebung der Ringe, die den für die Bodenkrümelung und -rückverfestigung wirksamen Außenumfang der Ackerwalze bilden, ergeben sich Vorteile. Da die wirksame Außenfläche der erfindungsgemäßen Walze von Ringen gebildet wird, werden im Bereich der Erdoberfläche hohe Erdaufwürfe vermieden werden, da die Erde gleich nach der Krümelung wieder abgelegt wird. Weiters kann durch die Freiräume zwischen den Speichen Erde durchtreten, so daß einerseits eine verbesserte Krümelung erreicht wird und anderseits Erdaufwerfungen vermieden werden. So kann an der Erdoberfläche ein vorteilhaftes Gemisch aus Grob- und Feinerdeteilen gebildet werden. In einem tieferen Bereich des Bodens entsteht durch die Abwinkelungen oder Krümmungen der die Außenkontur der Walze bildenden Ringe eine Bewegung des Erdreiches abwechselnd nach links und nach rechts, so daß knapp unter der Erdoberfläche die in diesem Bereich gewünschte Krümelstruktur entsteht. In einem noch tieferen Bereich des Bodens wirken die Ringe im Sinne einer vorteilhaften Rückverfestigung des Bodens.

In einer technisch einfachen Ausführungsform kann vorgesehen sein, daß die Ringe einen im wesentlichen runden Querschnitt aufweisen, wobei aber bei dieser Ausführungsform in Abhängigkeit von den jeweiligen Bodenverhältnissen das Verhältnis zwischen Krümelung und Rückverfestigung des Bodens nicht optimal sein kann.

Eine verbesserte Ausführungsform der Erfindung ist daher dadurch gekennzeichnet, daß die Ringe einen flachen Querschnitt aufweisen. Bei dieser Ausführungsform, bei der die Ringe beispielsweise aus Flacheisen oder Flachstahlteilen bestehen, können die Ringsegmente tiefer in den Boden eindringen, ohne daß es an der Oberfläche des Bodens zu einer Rückverfestigung kommt, die in diesem Fall erst in tieferen Bereichen eintritt, wobei die vorteilhafte Krümelung im Bereich der Oberfläche des Bodens erhalten bleibt.

Dabei ist besonders bevorzugt, wenn zwischen im wesentlichen geraden Bereichen Knicke liegen und insbesondere, daß gedachte Verlängerungen der Knicke die Achse der Ringsegmente in einem Winkel ungleich 90° schneiden.

Bei diesen Ausführungsformen tritt der Effekt ein, daß die in der Projektion auf den Umfang wirksame Fläche des Ringes beim Eindringen in den Boden sehr klein ist (nur die Materialdicke des Flacheisens oder Flachstahles) und die wirksame Fläche mit zunehmender Eindringtiefe des Ringes zunimmt. Dies hat zur Folge, daß es im Bereich der Bodenoberfläche zu praktisch keiner oder nur geringer Rückverdichtung des Bodens kommt, wogegen es in darunter liegenden Schichten zu einer erhöhten Rückverfestigung des Bodens kommt.

Bei einer weiteren vorteilhaften Weiterbildung der Erfindung, die dadurch gekennzeichnet ist, daß der Abstand der Achsen voneinander kleiner ist als der Durchmesser jedes Ringsegmentes, so daß die Ringe der Ringsegmente beider Ackerwalzen einander überlappen, tritt der vorteilhafte Effekt ein, daß durch den abgewinkelten oder wellenförmigen Verlauf benachbarter Ringsegmente eine verstärkte Bewegung des Erdreiches zwischen den Ringsegmenten erfolgt, die auch zu einem Durchtreten durch die Aussparungen zwischen den Speichen der einzelnen Ringsegmente führt, so daß einerseits eine verstärkte Krümelung des Bodens bewirkt wird und anderseits ein Verkleben der Ringsegmente selbst bzw. der Bereiche zwischen benachbarten Ringsegmenten vermieden wird.

Weitere vorteilhafte und bevorzugte Ausführungsformen der Erfindung sind Gegenstand der übrigen Unteransprüche.

Weitere Einzelheiten und Merkmale der Erfindung ergeben sich aus der nachstehenden Beschreibung der in den Zeichnungen gezeigten Ausführungsbeispiele. Es zeigt:
Fig. 1 eine Kombination von zwei Ackerwalzen in Vorderansicht,
Fig. 2 die Kombination aus Fig. 1 in Draufsicht,
Fig. 3 eine Seitenansicht der Ackerwalzen von Fig. 1 und 2,
Fig. 4 ein Einzelelement (Ringsegment) der erfindungsgemäßen Ackerwalze in Achsrichtung,
Fig. 5 das Einzelelement aus Fig. 4 in Seitenansicht, d.h. senkrecht zur Achse gesehen (gegenüber Fig. 4 in Umfangsrichtung um ca. 11° verdreht),
Fig. 6 in vergrößertem Maßstab ein Ringsegment und dessen Wirkung auf den Boden, die
Fig. 7 und 8 eine weitere Ausführungsform eines Ringsegmentes in Vorder- und Seitenansicht und die
Fig. 9 bis 11 praktische Anwendungsbeispiele für erfindungsgemäße Ackerwalzen in Kombination mit landwirtschaftlichen Maschinen (Eggen).

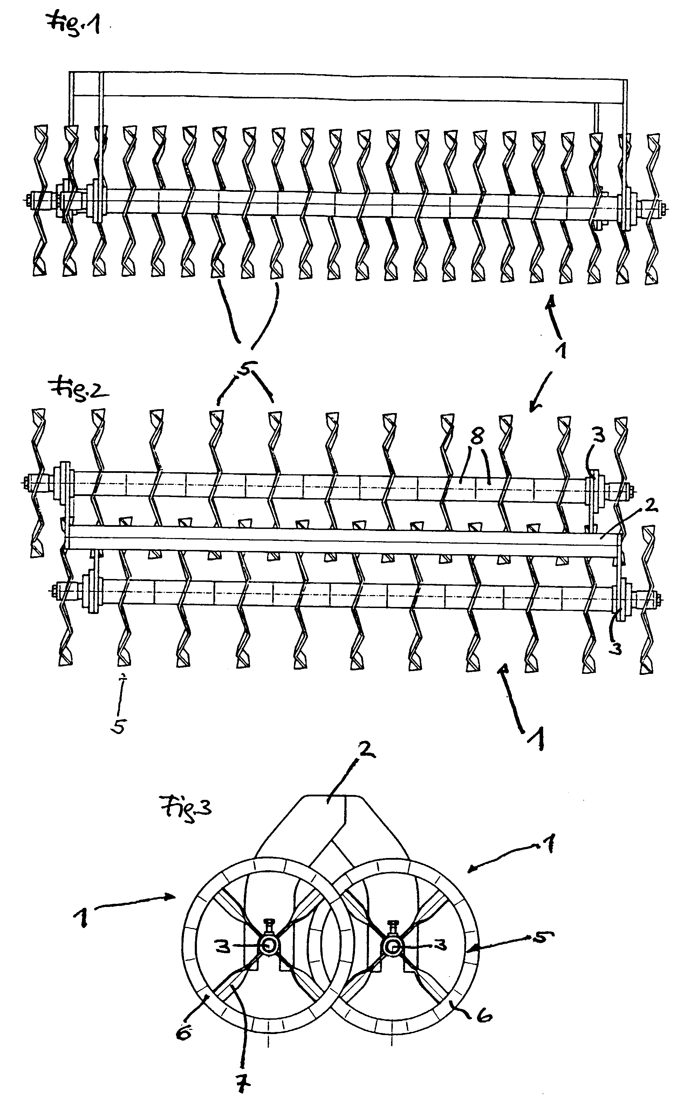

Bei der in den Fig. 1 bis 3 gezeigten Ausführungsform sind zwei Ackerwalzen 1 zu einer Kombination zusammengefaßt. Jede der Ackerwalzen 1 ist in Lagern 3 drehbar gelagert, die an einem gemeinsamen Träger 2 befestigt sind. Über den Träger 2 kann die Kombination aus den beiden Ackerwalzen 1 an einer Zugmaschine (Traktor, Ackerschlepper) befestigt werden, oder wie in den Fig. 9 bis 11 gezeigt, in eine Bestellkombination (z.B. Egge) eingebaut werden.

Jede der beiden Walzen 1 besteht aus mehreren, nebeneinander angeordneten Ringsegmenten 5. Dabei ist, wie insbesondere Fig. 3 zeigt, der Abstand der Lager 3 voneinander so gewählt, daß Ringe 6 der Ringsegmente 5 der beiden Ackerwalzen 1, wie die Fig. 2 und 3 zeigen, ineinandergreifen. Dadurch wird eine besonders vorteilhafte Wirkung der erfindungsgemäßen Ackerwalze 1 im Hinblick auf die Bodenkrümelung und Bodenrückverdichtung erzielt, da bedingt durch die Formgebung der Ringe 6 eine Bewegung des Bodens zwischen den Ringsegmenten erfolgt.

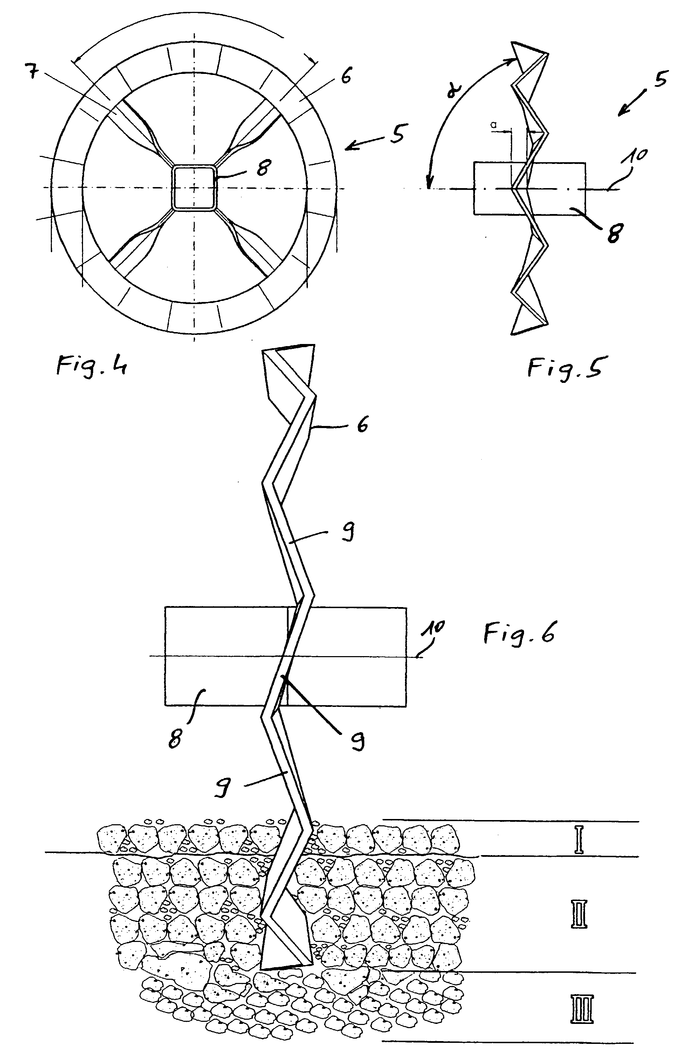

Die Ringsegmente 5, aus welchen die Ackerwalzen 1 gebildet sind, sind in vergrößertem Maßstab in zwei Ansichten in den Fig. 4 und 5 gezeigt. Es ist ersichtlich, daß jedes Ringsegment 5 aus einem Ring 6, vier Speichen 7 und einer Nabe 8, z.B. in Form eines Vierkantrohrstückes, besteht. Die aus Flacheisen gebildeten Speichen 7 sind innen an den Kanten des Formrohrstückes 8 angeschweißt und in sich verwunden, so daß sie mit ihren äußeren Teilen mit dem jeweiligen Abschnitt 9 des Ringes 6 des Ringsegmentes 5 fluchten und dort durch Verschweißen befestigt werden können.

Der Ring 6 besteht im Ausführungsbeispiel gemäß Fig. 4 bis 6 ebenfalls aus einem Flacheisen und ist mehrfach abgewinkelt (oder abgebogen, wenn ein wellenförmiger Verlauf vorliegen soll), wobei aufeinanderfolgende Bereiche 9 zwischen den Abwinkelungen in entgegengesetzte Richtungen weisen. Überdies sind die Knickkanten der Abwinkelungen so ausgerichtet, daß sie jeweils zur Achse 10 des Ringsegmentes 5 hin weisen und diese Achse 10 im Winkel α ungleich 90° schneiden.

Wesentlich für die Ringe 6 der Ringsegmente 5 der Ackerwalze 1 ist es, daß sie Bereiche 9 aufweisen, die zur Radialebene (eine zur Achse 10 der Ackerwalze 1 normale Ebene) und zur Umfangsrichtung (Richtung einer in der Radialebene liegenden Tangente) abwechselnd in entgegengesetzte Richtungen schräggestellt sind, wie dies aus den Fig. 5 und 6 erkennbar ist.

Es ist ersichtlich, daß der Ring 6 des Ringsegmentes 5 einfach hergestellt und über die Speichen 7 mit dem Formrohr 8 verbunden werden kann.

Ein weiterer Vorteil ist es, daß die zwischen den einzelnen Knickstellen (oder Biegestellen) liegenden Bereiche des Ringes 6 in sich verwunden sind (ersichtlich für den Abschnitt 9 in Fig. 6), so daß sich eine sehr wirksame Krümelung und Rückverfestigung des Bodens ergibt, wenn Boden mit einer Ackerwalze 1 oder einer Kombination aus Ackerwalze 1 bearbeitet wird, deren Ringsegmente 5 wie beschrieben ausgebildet sind.

Durch die Herstellung des Ringes 6 aus Flacheisen (oder Flachstahl) ist es auf einfache Weise möglich, dessen radiale Breite unter Berücksichtigung der Art des Bodens an den jeweils gewünschten Einsatzzweck optimal anzupassen, indem die Abmessungen des Flacheisens entsprechend den Bodenverhältnissen und dem Einsatzzweck gewählt werden.

Die einzelnen Ringsegmente 5 werden mit ihren die Naben 8 bildenden Formrohrstücken, deren Länge gleichzeitig den Abstand benachbarter Ringsegmente 5 voneinander definiert, auf eine ebenfalls von einem Formrohr gebildete Achse geschoben, die ihrerseits in den Lagern 3 drehbar gelagert ist.

Durch die Verwendung von Formrohren als Naben 8 für die Ringsegmente und für die sie tragende Achse wird auf einfache Weise verhindert, daß sich die Ringe 6 gegeneinander in unerwünschter Weise verdrehen. Überdies kann durch die Wahl der Länge der die Naben 8 der einzelnen Ringsegmente 5 bildenden Formrohrstücke der seitliche Abstand der Ringe 6 voneinander auf einfache Weise auf den gewünschten Wert festgelegt werden. Die Ringsegmente 5 werden auf der Formrohrachse durch die an den Enden der Formrohrachse vorgesehenen Lager 3 gehalten.

Die aus den einzelnen Ringsegmenten 5 zusammengesetzte Ackerwalze 1 kann für sich alleine oder in Kombination mit mehreren gleichartigen Ackerwalzen 1 (ein Beispiel für eine Kombination mit zwei Ackerwalzen 1 ist in Fig. 1 bis 3 gezeigt) und gegebenenfalls in Kombination mit anderen landwirtschaftlichen Bodenbearbeitungsgeräten (z.B. Eggen) verwendet werden.

Durch die besondere Ausbildung der einzelnen Ringsegmente 5 und insbesondere die Form der Ringe 6 derselben ergeben sich die in Fig. 6 veranschaulichten und nachstehend erläuterten, vorteilhaften Wirkungen.

Eine erfindungsgemäße Ackerwalze entfaltet in einem Oberflächenbereich I, in einem Mittelbereich II und einem Tiefenbereich III, wobei zwischen den Bereichen II und III der Saathorizont liegt, d.h. jenem Bereich, in welchem das Saatgut eingebracht wird bzw. wurde, unterschiedliche Wirkungen.

Während der Bearbeitung des Bodens mit Hilfe der Ackerwalze 1 rollt diese ab, wobei der Ring 6 mit seiner Außenkante zunächst in den Oberflächenbereich I eindringt. In weiterer Folge wird die Erde in den Bereichen I und II durch das weitere Abrollen des Ringes 6 und durch dessen Schrägstellung sowohl in Umfangs- als auch in Radialrichtung abwechselnd nach links und rechts bewegt, wodurch in Verbindung mit den benachbarten Ringsegmenten 5 eine vorteilhafte Krümmelung, jedoch praktisch keine Rückverfestigung des Bodens erfolgt.

Diese Rückverfestigung nimmt zu, je weiter der Ring 6 in den Boden eindringt, da auch die Projektion des Ringes 6 auf eine gedachte Mantelfläche des Ringes 6 während des Einringens des Ringes 6 in den Boden zunimmt. Diese Projektion nimmt wie in Fig. 5 dargestellt ist, im Bereich einer Abwinkelung die Breite a an. Dies bewirkt, daß bevorzugt im Tiefenbereich III, d.h. unter dem Saathorizont, eine verstärkte Rückverfestigung des Bodens erfolgt, was eine erhöhte Kapillarwirkung des Bodens in diesem Bereich und somit eine bessere Versorgung des Saatgutes mit Wasser bewirkt. Im mittleren Bereich II und im Oberflächenbereich I hat jedoch praktisch keine Rückverfestigung stattgefunden, so daß hier die Kapillarwirkung des Bodens verringert und eine unerwünschte, hohe Verdunstung von Wasser hintangehalten wird. Das Ausmaß der Rückverfestigung kann dabei sowohl durch die Breite des Ringes 6 (in radialer Richtung) als auch den Winkel α beeinflußt werden.

Da der Ring 6 weit in den Boden eindringt (im Ausführungsbeispiel von Fig. 6 etwa bis zur Mitte des Bereiches II) wird die Krümmelung vorteilhaft unterstützt.

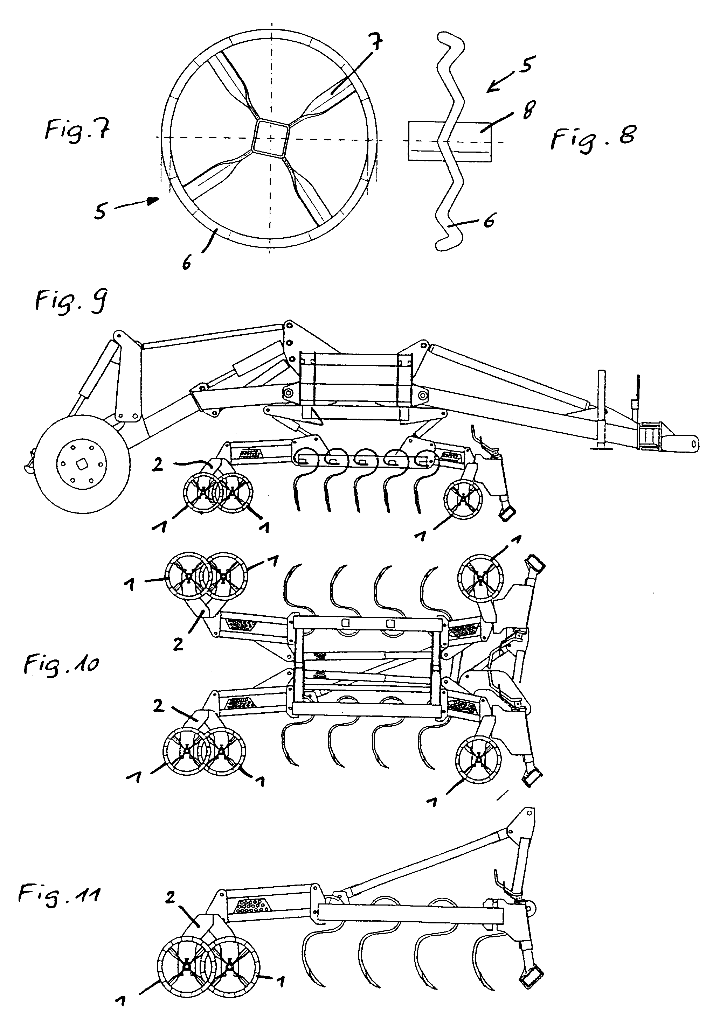

In den Fig. 7 und 8 ist eine vereinfachte Ausführungsform eines erfindungsgemäßen Ringsegmentes dargestellt, dessen Ring aus einem Rundeisen hergestellt ist. Diese Ausführungsform weist zwar nicht die besonders guten Eigenschaften hinsichtlich der Bodenrückverfestigung wie die Ausführungsform gemäß Fig. 4 bis 6 auf, ist dafür aber einfacher herzustellen und weist zufriedenstellende Eigenschaften hinsichtlich der Krümelung auf, d.h. es entsteht ein vorteilhaftes Gemisch von Roh- und Feinerdeanteilen.

Die Fig. 9 bis 11 zeigen verschiedene Anwendungsbeispiele von erfindungsgemäßen Ackerwalzen, wobei diese einerseits als einfache Walzen und anderseits als Walzenpaare vorgesehen sind.

So zeigt Fig. 9 die Kombination mit einer Egge.

Fig. 10 zeigt die Kombination mit einer Wendeegge.

Fig. 11 zeigt, wie ein Walzenpaar als Nachlaufwalze mit einer Egge kombiniert werden kann.

Ein Ausführungsbeispiel der Erfindung kann wie folgt beschrieben werden:

Eine Ackerwalze 1 ist aus mehreren Ringsegmenten 5 zusammengesetzt. Jedes Ringsegment 5 besteht aus einer Formrohrnabe 8 und einem Flacheisenring 6, der mit der Nabe 8 über mehrere Speichen verbunden ist. Der Ring 6 ist abwechselnd nach der einen und nach der anderen Seite geknickt, wobei die Knicklinien die Achse 10 des Ringsegmentes 5 schneiden und mit dieser einen Winkel a ungleich 90° einschließen. Dadurch wird im obersten Bodenbereich I eine Mischstruktur aus Grob- und Feinerdeteilen erhalten, in einen mittleren Bodenbereich II eine Krümelstruktur erzielt, und in einem unteren Bodenbereich III eine Rückverfestigung des Bodens bewirkt.

## Patentansprüche

1. Ackerwalze (1) zum Krümeln und Rückverfestigen von Ackerboden, mit mehreren auf einer Welle angeordneten Ringsegmenten (5), die in einer Radialebene liegende Ringe (6) aufweisen, die über Speichen (7) mit den Naben (8) der Ringsegmente (5) verbunden sind, dadurch gekennzeichnet, daß die Ringe (6) Bereiche (9) aufweisen, die zur Radialebene und zur Umfangsrichtung abwechselnd in entgegengesetzte Richtungen schräggestellt sind.

2. Ackerwalze nach Anspruch 1, dadurch gekennzeichnet, daß die Ringe einen im wesentlichen runden Querschnitt aufweisen.

3. Ackerwalze nach Anspruch 1, dadurch gekennzeichnet, daß die Ringe (6) einen flachen Querschnitt aufweisen.

4. Ackerwalze nach Anspruch 3, dadurch gekennzeichnet, daß zwischen im wesentlichen geraden Bereichen (9) des Ringes (6) Knicke liegen.

5. Ackerwalze nach Anspruch 4, dadurch gekennzeichnet, daß zwischen benachbarten Knickstellen liegende Bereiche (9) der Ringe (6) in sich verwunden sind.

6. Ackerwalze nach Anspruch 4 oder 5, dadurch gekennzeichnet, daß gedachte Verlängerungen der Knicke die Achse (10) der Ringsegmente (5) in einem Winkel (α) ungleich 90° schneiden.

7. Ackerwalze nach einem der Ansprüche 4 bis 6, dadurch gekennzeichnet, daß die gedachten Verlängerungen benachbarter Knicke in entgegengesetzte Richtungen weisen.

8. Ackerwalze nach einem der Ansprüche 3 bis 7, dadurch gekennzeichnet, daß die Ringe (6) der Ringsegmente (5) aus mehrfach geknickten Flacheisen- oder Flachstahlteilen bestehen.

9. Ackerwalze nach einem der Ansprüche 1 bis 8, dadurch gekennzeichnet, daß die Speichen (7) in sich verdrehte Flacheisenstäbe sind.

10. Ackerwalze nach einem der Ansprüche 1 bis 9, dadurch gekennzeichnet, daß die Naben (8) Formrohrstücke sind.

11. Ackerwalze nach Anspruch 10, dadurch gekennzeichnet, daß die Fußpunkte der Speichen (7) im Bereich der Kanten des Formrohres (8) mit diesem verbunden, insbesondere verschweißt sind.

12. Ackerwalze nach einem der Ansprüche 1 bis 11, dadurch gekennzeichnet, daß die Ringsegmente (5) auf der sie tragenden Welle drehfest festgelegt sind.

13. Ackerwalze nach Anspruch 12, dadurch gekennzeichnet, daß die Welle ein Formrohr ist, über das die die Naben (8) bildenden Formrohre der Ringsegmente (5) aufgeschoben sind.

14. Kombination aus zwei Ackerwalzen (1) nach einem der Ansprüche 1 bis 13, dadurch gekennzeichnet, daß der Abstand der Achsen der Ackerwalzen (1) voneinander kleiner ist als der Durchmesser jedes Ringsegmentes (5), so daß die Ringe (6) der Ringsegmente (5) der Ackerwalzen (1) einander überlappen.

15. Ackerwalze nach Anspruch 14, dadurch gekennzeichnet, daß die Ackerwalzen (1) über Lager (3) in einem gemeinsamen Träger (2) gelagert sind.
